# EUROPEAN PATENT APPLICATION

(11) **EP 3 859 949 A1**
(43) Date of publication of application: **04.08.2021**
(21) Application number: 21153979.6
(22) Date of filing: 28.01.2021
(51) Int. Cl.: H02K 7/14, B08B 3/02, H02K 9/06, H02K 5/20, H02K 9/26

(54) **SYSTEM FOR COOLING A LOW PRESSURE CLEANER**

(30) Priority: 31.01.2020 DK PA202070060
(71) Applicant: System Cleaners A/S, 9200 Aalborg SV (DK)
(72) Inventor: KJØLLER, Per, 9210 Aalborg Ø (DK)
(74) Representative: Patrade A/S

(57) **Abstract**

The present invention relates to a system for cooling a low-pressure cleaner. The object of the pending patent application is to achieve effective cooling of a low-pressure cleaner. A further object of the pending patent application is the use of the cooling fins in the electro motor for cooling the rest of the low-pressure cleaner. The object is fulfilled by the air inlet to the motor connected by a cooling channel to the outside of the housing, which motor outlet air is circulating inside the housing towards an air outlet formed in the housing. Hereby can be achieved that the electromotor can operate as a cooling device, because the outlet air from the motor is to be used for cooling of the whole inner volume of the housing. This is effective in cooling a low-pressure cleaner simply because such low-pressure cleaner comprises a number of energy-consuming components.

## Description

### Field of the Invention

The present invention relates to a system for cooling a low pressure cleaner, which low pressure cleaner comprises a housing, which low pressure cleaner comprises a pump adapted to increase the pressure of a liquid media, which pump is driven by an electric motor, which low pressure cleaner has access to a source of pressured air, which pressured air is connected to a number of pneumatic valves, which pneumatic valves are adapted to open or close a connection to a number of various media, which various media is adapted to be added to the liquid media by venturi devices, which system comprises a further pneumatic valve adapted for adding pressured air to the outlet for the liquid media, which pneumatic valves are pressure controlled by a mechanical selector, which electric motor is provided with cooling fins for ventilation of the motor.

### Background of the Invention

Low pressure cleaners are distinguished from high pressure cleaners in that they operate at much lower pressures (hence the name) and with significantly larger volumes of media. The term "media" shall in this context be understood as a mixture of water and various cleaning or disinfecting ingredients or just clean water. The manipulation of large volumes of media even at low pressure requires substantial power.

Low pressure cleaners find widespread use in the food processing industry. One common problem for these types of low-pressure cleaners is the requirement to provide mobile devices which may be manoeuvred around the processing plants equipment, in order to facilitate adequate cleaning of the processing equipment. The cleaning often takes place in confined spaces at elevated temperature. Consequently, it may be difficult for the low-pressure cleaner to maintain optimum working conditions. At the same time substantial amounts of media needs to be handled/processed by the low-pressure cleaner. This puts a strain on the machinery of the low-pressure cleaner, often resulting in an overload or overheating whereby security breakers being activated. The personnel operating the cleaner and undertaking the cleaning must then wait for the cleaner to cool down before continuing operation. This often leads to a substantial loss of effective working time. Hence there is a need for a low-pressure cleaner which is less susceptible to overheating.

### Object of the Invention

The object of the pending patent application is to achieve effective cooling of a low-pressure cleaner.

A further object of the pending patent application is the use of the cooling fins in the electro motor for cooling the rest of the low-pressure cleaner.

### Description of the Invention

The object can be fulfilled by a system for cooling a low pressure cleaner, which low pressure cleaner comprises a housing said housing is constituted by a rear wall, a front wall and a cover connecting the front wall and the rear wall, thereby enclosing an inner volume, inside said inner volume a pump is arranged, where liquid is supplied to the pump from a liquid inlet/pump inlet in the housing through suitable pipe means and where an outlet is provided in the housing for expelling low pressurized liquid, which pump is driven by an electrical motor, where a fan is provided for cooling the motor and where a first intermediate wall is provided creating an air chamber limited by the first intermediate wall, the rear wall and the cover, where an air inlet is provided in the rear wall, such that the fan is arranged in said air chamber or in immediate vicinity to said air chamber and where the air is forced through the motor by the fan such that the air passes the pump before being expelled through an air outlet provided in the front wall.

Hereby it can be achieved that the electromotor can operate as a cooling device, because the outlet air from the motor is to be used for cooling of the whole inner volume of the housing. By furthermore designing the interior of the low-pressure cleaner such that the cooling air is guided past vital components, such as the electrical motor, the electronic control box etc. optimal cooling is provided. This is effective in cooling a low-pressure cleaner simply because such low-pressure cleaner comprises a number of energy-consuming components. At first the motor is cooling itself by fresh air, and also electronic control device to control the motor. The control device can use inverter technology. Semiconductors of the inverter need cooling. Further, inside the low-pressure cleaner there is a water pump which in some situations is pumping a relative high volume of water up to a medium pressure between 20 and 50 bars. The increasing pressure in for example water will also increase the temperature in the water. Further, components that are placed in the housing such as pneumatic valves and venturi devices for adding chemicals to the flowing water, these components also need a kind of cooling. By placing the inlet for fresh air in the one hand of the housing, the outlet can be placed in the opposite hand. In that way, air circulation inside the housing will be achieved.

In a preferred embodiment of the invention the source of pressured air can be achieved by an internal air compressor. In that way it can be achieved that no pressure air connection is necessary and only electric connection and water connection is necessary. The compressor inside the housing also needs cooling. Therefore, the relative fresh air circulating in the housing will keep the compressor at a relatively low temperature.

In a further preferred embodiment of the invention the system can comprise an electronic control circuit for control of the electric motor, which control circuit is placed above the motor with a distance for air circulation between motor and the control circuit. Hereby can be achieved that the electronic control circuit is thermic isolated from the electromotor. Because there is a distance between the electromotor and the electronic circuit, air circulation is possible between the electromotor and electronic circuit. In this way it is possible to keep the electronic components at a relative low temperature.

In a further preferred embodiment of the invention the air inlet to the motor can be performed through an inner wall forming a volume inside the housing. Hereby it can be achieved that the air which is sucked into the motor is filtered before it is entering the inlet of the electromotor. Because a low-pressure cleaner is operating in a relatively wet environment, it is highly effective that the inlet for the housing is in the outer part of the housing and that the inlet to the electromotor is partly away from the lowest part of the housing. In that way, drops of water that is sucked into the housing is not led into the electromotor but is drained from the housing.

In a further preferred embodiment of the invention the cooling channel can comprise the inner wall which fits around an air inlet of an electrical motor. Hereby it can be achieved that all air that is sucked into the volume between the outer and the inner wall, is directed to the rotating blowing means at the electromotor. Especially in this way it can be achieved that no circulating air will circulate back to the inlet and thereby a much better cooling device is achieved.

In a further preferred embodiment of the invention the low-pressure cleaner can comprise means provided for the low-pressure cleaner to be rolled across a surface. Hereby it can be achieved that the low-pressure cleaner can be moved from one operation position to another.

The objects can further be fulfilled by a method for cooling a low-pressure cleaner having a system as disclosed above comprising the following steps:
a. Let the fan of the motor suck air into the air chamber from the outside via the air inlet, and pass the air along the motor,
b. Let the motor outlet air circulate around the motor and if present also electronic control circuit for cooling,
c. Let the motor outlet air circulate around the pump,
d. Let the motor outlet air circulate around the pneumatic valves if any pneumatic valves are present,
e. Let the motor outlet air circulate towards an air outlet.

Hereby can be achieved that all components placed in the housing of for example a low-pressure cleaner will be cooled automatically by air which at first is cooling the electro-motor and hereafter cooling further components placed in the same housing.

This cooling system can be highly effective if for example the low-pressure cleaner is operating with relatively hot inlet water that is pumped up to a higher pressure. In that way the water is in no way performing any cooling inside the housing. Here, it is highly effective that there is an air circulation around the different components in the housing.

In a preferred embodiment of the method the motor outlet air can circulate around the compressor. Hereby it can be achieved that also an internal compressor is operating with its own electromotor and its own electronic control device is cooled by circulating air inside the housing.

### Description of the Drawing

- Fig. 1: shows a system concerning a low-pressure cleaner placed in a housing.
- Fig. 2: shows a system concerning a low-pressure cleaner placed in a housing includ-ing an internal compressor.

### Detailed Description of the Invention

### Reference signs:

System (2)
low pressure cleaner (4)
housing (6)
pump (8)
liquid media (10)
electric motor (12)
source of pressured air (14),
pneumatic valves (16)
various medias (18),
venturi devices (20)
mechanical selector (22)
cooling fins (24)
air inlet (26)
cooling channel (28)
the outside (30)
motor outlet air (32)
air outlet (34)
compressor (36)
electronic control circuit (38)
distance (40)
inner wall (42)
volume (44)

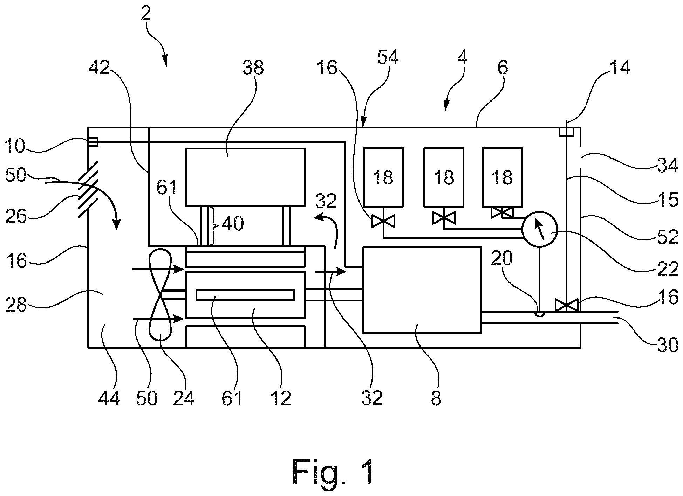

Figure 1 shows a side view of a first possible embodiment for the invention. The figure 1 shows a system 2 concerning a low-pressure cleaner 4 placed in a housing 6. Inside the housing is arranged a pump 8 which pump 8 is pumping a liquid media, supplied to inlet 10 and the pump 8 is driven by an electric motor 12. An inlet for a source of pressured air 14 is connected to the housing 6. In the housing 6 is indicated various media 18, which can be selected one by one by a mechanical selector 22. From the mechanical selector 22 is indicated a connection to a venture device 20 placed at the pressure outlet from the pump. The electric motor 12 comprises a cooling fan 24. Further is indicated an air inlet 26, which is an opening in a rear end of the housing 6 into a cooling channel 28. Fresh air is indicated by arrows 50. Electric motor outlet air 32 is indicated as air is passing through the electro-motor. Further is indicated electronic control circuit 38, which is placed with a distance 40 above the motor 12. Further is indicated an inner wall 42 which separates the inlet cooling channel 28 from the inner of the housing. Thereby is created an air volume 44 which is sucked past the various components of the low pressure apparatus. The volume 44 also facilitates that any moisture accidentally being sucked in through the inlet 26 remains in the cooling channel 28 and is not transported further into the housing.

In operation, the electro-motor 12 will drive the pump 8 and pressurised water is ejected from of the outlet 30. Before being ejected from the outlet 30, probably chemical solutions/agents will be added from the volumes 18. The cooling fans 24 are forcing fresh air through the electromotor 12. The air that leaves the electromotor is indicated with 32. This air is circulating into the housing 6, where a weak overpressure is generated. The cooling air is only able to leave the housing 6 through the air outlet 34. Hereby it can be achieved that an electromotor comprising its own cooling fans to achieve cooling both of the electro motor but also by channelling the air 32 past the electronic control box (38) and the pump housing 8, the cooling air 32 is "re-used" for cooling these components also. The electromotor 12 is used for cooling the other components, especially the electronic control circuit 38, but also the pump 8. In that way, the low-pressure cleaner 4 is being cooled simply by using the existing electro-motor.

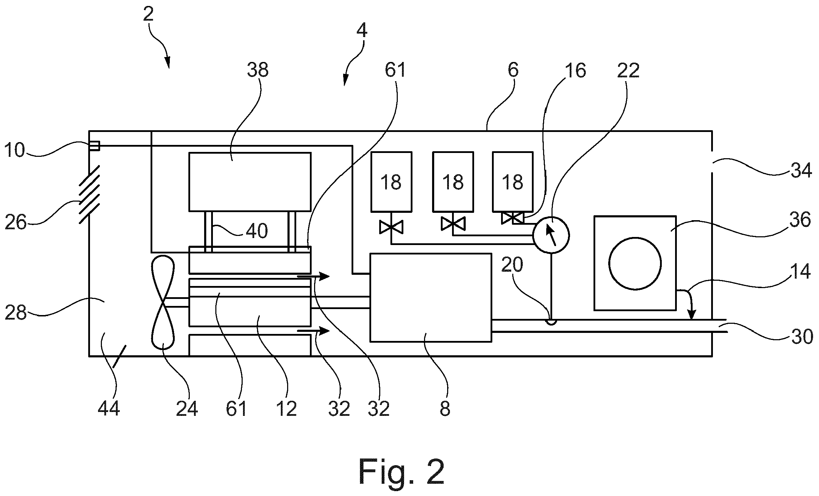

Figure 2 discloses mostly the same embodiment as figure 1. The difference is that at figure 2 is indicated an internal compressor 36. Because there is an internal compressor, the source of pressured air 14 is not indicated in figure 2.

By the system indicated in figure 2, only a connection to electric power and a connection to a water inlet 10 are required to get a system in operation. The circulating air inside the housing 6 will be able to cool the compressor which comprises its own electro-motor driving a compressor device.

## Claims

1. System (2) for cooling a low pressure cleaner (4), which low pressure cleaner (4) comprises a housing (6) said housing is constituted by a rear wall (56), a front wall (52) and a cover (54) connecting the front wall and the rear wall, thereby enclosing an inner volume, inside said inner volume a pump (8) is arranged, where liquid is supplied to the pump (8) from a liquid inlet/pump inlet (10) in the housing (6) through suitable pipe means and where an outlet (30) is provided in the housing for expelling low pressurized liquid, which pump (8) is driven by an electrical motor (12), where a fan (24) is provided for cooling the motor (8) and where a first intermediate wall 42 is provided creating an air chamber (28) limited by the first intermediate wall (42), the rear wall (56) and the cover (54), where an air inlet (26) is provided in the rear wall (56), such that the fan (24) is arranged in said air chamber (28) or in immediate vicinity to said air chamber (28) and where the air is forced through the motor by the fan (24) such that the air passes the pump (8) before being expelled through an air outlet (34) provided in the front wall (52).

2. System (2) for cooling according to claim 1 wherein an electronic control circuit (38) for control of the electric motor (12), is positioned outside the air chamber (28) and above the motor (12) with a distance (40) to said motor for air circulation between the motor (12) and the control circuit (38).

3. System according to claim 2 wherein the electrical motor (12) and/or the pump (8) is provided with cooling fins (61) on at least part of the exterior, and where when the motor (12) is provided with cooling fins (61) facing the electronic control box, thereby creating a cooling air channel between the electronic control box and the electrical motor.

4. System according to claim 1 wherein air channels are provided for circulating the air around the pump (8).

5. System according to claim 1 wherein to a source of pressured air (14) is provided by an internal compressor (36), which pressured air (14) is connected to a number of pneumatic valves (16), which pneumatic valves (16) are adapted to open or close connections to a number of various media reservoirs (18), which various media in said media reservoirs (18) are adapted to be added to the liquid media by one or more venturi devices (20), which system comprises a further pneumatic valve (16') adapted for adding pressured air (14) to an outlet (30) for the liquid media, which pneumatic valves (16,16') are pressure controlled by a mechanical selector (22).

6. Method for cooling a low pressure cleaner having a system as disclosed in any of claims 1 to 5 **characterized in** the following step:
a. Let the fan (24) of the motor 12 suck air into the air chamber (28) from the outside via the air inlet (50), and pass the air along the motor (12),
b. Let the motor outlet air (32) circulate around the motor and if present also electronic control circuit (38) for cooling,
c. Let the motor outlet air (32) circulate around the pump (8),
d. Let the motor outlet air (32) circulate around the pneumatic valves (16) if any pneumatic valves are present,
e. Let the motor outlet air (32) circulate towards an air outlet (34).

7. Method according to claim 6 when dependent from a system according to claim 5, wherein in a further step the motor outlet air (32) also circulates around the compressor (36).
